# EUROPÄISCHE PATENTSCHRIFT

(11) **EP 0 869 333 B1**
(45) Veröffentlichungstag und Bekanntmachung des Hinweises auf die Patenterteilung: **09.07.2003**
(21) Anmeldenummer: 98106066.8
(22) Anmeldetag: 02.04.1998
(51) Int. Cl.: G01D 9/00, G01D 3/08

(54) **Datenrecorder**
Data recorder
Enregistreur de données

(30) Priorität: 03.04.1997 DE 19713799
(43) Veröffentlichungstag der Anmeldung: 07.10.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: Plettner, Andreas, 82340 Feldafing (DE); Haberger, Karl, 82340 Feldafing (DE)
(74) Vertreter: Meister, Wolfhard, Dipl.-Ing.

(56) Entgegenhaltungen:
- GB-A- 2 267 156
- US-A- 5 117 096
- US-A- 5 173 609

## Beschreibung

Die vorliegende Erfindung betrifft einen Datenrecorder zur Protokollierung von Umweltdaten, insbesondere von Temperaturdaten über eine vorgegebene Zeitspanne.

Zahllose Produkte, vor allem aus dem Lebensmittel- oder Medizinbereich dürfen während ihrer Lagerung bzw. ihres Transports gewisse Temperaturgrenzen nicht unter- oder überschreiten, um die zugesicherten Eigenschaften nicht zu verlieren bzw. zu beeinträchtigen.

Um eine derartige Überwachung gewährleisten zu können, sind bereits entsprechende Überwachungssysteme entwickelt worden, wobei eine verbreitete Art die sogenannten Umschlag-Indikatoren darstellen (siehe z.B. US-A-5 117 096). Die Umschlag-Indikatoren sind in der Lage, die Einhaltung von bestimmten Grenzwerten, beispielsweise von Temperaturgrenzwerten, zu protokollieren. Eine weitere Art derartiger Geräte stellen die sogenannten Datenlogger dar, die als elektronische Komponenten in Quader- oder Würfelform mit mehreren cm³ Volumen dem zu überwachenden Gut beigelegt werden.

Den zuerst genannten Umschlag-Indikatoren haftet der Nachteil an, daß sie nur die Einhaltung bestimmter Grenzwerte diskriminieren und nicht nach Dauer und Zeitpunkt sowie mit ausreichender Auflösung protokollieren. Den Datenloggern haftet der Nachteil an, daß sie verglichen mit den Umschlag-Indikatoren teuer sind und darüber hinaus in einfacher Weise von dem zu überwachenden Gut entfernt werden können, wodurch Manipulationen ermöglicht werden.

Es ist die Aufgabe der vorliegenden Erfindung, einen preiswert herzustellenden Datenrecorder anzugeben, der in hohem Maße sicher gegenüber Manipulationen ist.

Diese Aufgabe wird durch die Gegenstände der Ansprüche 1 und 9 gelöst.

Bevorzugte Ausgestaltungen der Erfindung sind Gegenstand der Unteransprüche.

Die vorliegende Erfindung wird im folgenden unter Bezugnahme auf bevorzugte Ausführungsformen näher erläutert.

Der erfindungsgemäße Datenrecorder ist vorzugsweise als kartenähnlicher Gegenstand oder als eine Art Aufkleber ausgeführt. Insbesondere kann der Datenrecorder die Form einer Standardchipkarte aufweisen, um dadurch mit den heute bereits ausgereiften Produktionstechniken für derartige Karten hergestellt werden zu können.

Unabhängig von der Ausführungsform weist der erfindungsgemäße Datenrecorder eine oder mehrere Sensoreinrichtungen auf, mittels denen verschiedene Umweltdaten detektierbar sind, wie beispielsweise Temperatur, relative Feuchte, Luftdruck, Schallpegel, radioaktive Strahlung oder chemische oder biologische Substanzen.

Darüberhinaus weist der Datenrecorder eine Speichereinrichtung auf, in der die während des Meßzeitraums erfaßten Daten abgelegt werden können. Eine Steuereinrichtung, die vorzugsweise als Mikroprozessor ausgeführt ist, steuert die Meßdatenerfassung und - aufzeichnung.

Darüber hinaus ist eine Zeitgebereinrichtung vorgesehen, auf Grundlage derer die Steuereinrichtung die Meßzeitpunkte festlegt und basierend auf der Zeitdaten erhalten und zusammen mit den Meßwerten abgespeichert werden, um eine zeitbezogene Protokollierung der Meßdaten vornehmen zu können. Die Zeitgebereinrichtung kann entweder als eine Art Uhr ausgeführt sein oder im einfachsten Fall auch nur als Takteinrichtung. Über Kenntnis von Start- und Endzeit der Messung und insbesondere dann, wenn die Messungen in konstanten Abständen aufeinander folgen, ist es möglich aus derartigen relativen Zeitdaten später wieder absolute Zeitdaten zu gewinnen und die einzelnen Meßwerte tatsächlichen Meßzeitpunkten zuzuordenen.

Die zumindest aus Speichereinreichtung, Steuereinrichtung und Zeitgebereinrichtung bestehende Elektronik des erfindungsgemäßen Datenrecorders ist vorzugsweise auf einem einzigen Chip integriert. Gemäß einem besonderen Aspekt der vorliegenden Erfindung erfolgt diese Integration auf extrem dünnen Chips, vorzugsweise mit einer Dicke von weniger als 50µm und besonders bevorzugt mit einer Dicke zwischen 10 und 20µm. Herkömmliche Chips weisen Dicken von etwa 200-600 µm auf, da bei diesen in der Regel auf eine geringe Fläche statt auf eine geringe Dicke geachtet wird. Gemäß der vorliegenden Erfindung sind extrem dünne Chipschichten bevorzugt, da der entsprechende Chip dann eine gewisse Flexibilität aufweist, die ihn insbesondere für eine Ausführungsform des erfindungsgemäßen Datenrecorders als Aufkleber geeignet macht. Der die Elektronik tragende Chip ist so dünn, daß er für den Benutzer des Aufklebers kaum wahrzunehmen ist, und läßt sich nahezu beliebig anbringen.

Zur Versorgung der Elektronik des Datenrecorders ist eine Batterieeinrichtung vorgesehen, die vorzugsweise als extrem dünne Zelle ausgeführt ist, und vorzugsweise ebenfalls eine gewisse Flexibilität aufweist, insbesondere zur Verwendung in einer Ausführungsform des Datenrecorders als Aufkleber.

Schließlich weist der erfindungsgemäße Datenrecorder eine Befestigungseinrichtung auf, mit der er an dem zu überwachenden Gut abgebracht wird, sowie eine Unterbrechungseinrichtung, durch die die Meßdatenaufzeichnung und/oder Meßdatenerfassung unterbrochen wird, sobald an dem Datenrecorder manipuliert wird.

Die Befestigungseinreichung besteht bei der Ausführungsform als Aufkleber aus der Klebeschicht selbst. Wird eine kartenkörperähnliche Ausführungsform gewählt, so besteht die Befestigungseinrichtung vorzugsweise aus einer Klebeschicht oder aus einem Band, mit dem das zu überwachende Gut und die Karte nur mittels Zerstörung wieder voneinander gelöst werden können. Die Unterbrechungseinrichtung ist vorzugsweise so ausgelegt, daß bei einem Manipulationsversuch eine Leiterbahn zerstört wird, wodurch die Meßdatenerfassung und/oder Meßdatenaufzeichnung unterbrochen wird. Insbesondere kann dies so ausgeführt sein, daß eine elektrische Leitung vorgesehen ist, die beim Entfernen des Datenrecorders von seiner Unterlage, also dem Lösen der mechanischen Verbindung vom zu überwachendem Gut an mindestens einer Stelle eine irreversible Unterbrechung erfährt.

Die entsprechende Leiterbahnunterbrechung kann beim späteren Auswerten des Datenrecorders erkannt werden oder aber sie führt unmittelbar zum Abbruch einer ordnungsgemäßen Funktionsweise des Datenrecorders, die wiederum anhand des entsprechenden Speichereintrags erkannt wird.

Der erfindungsgemäß vorgeschlagene Datenrecorder läßt sich extrem preiswert herstellen, insbesondere dann, wenn er als kartenähnlicher oder aufkleberähnlicher Gegenstand ausgeführt wird. Insbesondere wird gemäß der vorliegenden Erfindung ein Datenrecorder zur Einmalanwendung vorgeschlagen, dessen elektronische, mechanische und chemische Haltbarkeit sowie dessen Energiezufuhr nur auf eine zeitlich begrenzte Nutzungsdauer ausgelegt ist. Die Nutzungsdauer kann beispielsweise einen Lagerzeitraum, einen Transportzeitraum oder einen Produktionszeitraum darstellen.

Eine spezielle Anwendung für den erfindungsgemäßen Datenrecorder stellt die Überwachung des Temperaturverlaufs während der Zeitspanne zwischen Herstellung und Anlieferung von Fleisch-, Fisch- oder Obstprodukten zur Endverkaufsstelle dar. Bei Fleischprodukten ist es heute in zunehmendem Maße üblich, bereits im Herstellerbetrieb endverkaufsfähige Einheiten zu portionieren. Diese Einheiten weisen eine vergleichsweise geringe Wärmekapazität auf, werden allerdings über große Entfernungen transportiert, lange gelagert und wechseln mehrmals den Besitzer. Hieraus ergibt sich die Problematik, daß die ordnungsgemäße Lagerung dem Einfluß und der Sorgfalt des ursprünglichen Lieferanten entzogen ist und bei verdorbenen Waren nicht mehr erkannt werden kann, ob dies auf eine mangelhafte Ware oder mangelhafte Lagerung bzw. Transport zurückzuführen ist. Die zeitbezogene Temperaturprotokollierung direkt am Produkt, die mit dem erfindungsgemäßen Datenrecorder ermöglicht wird, ermöglicht einen direkten Rückschluß auf unsachgemäßen Umgang mit den entsprechenden Gütern. Eine besonders exakte Überwachung bei Fleisch oder Fisch ist insbesondere dann möglich, wenn der erfindungsgemäße Datenrecorder mit in die Vakuumverpackung aufgenommen wird und somit untrennbar mit dem zu überwachenden Gut verknüpft ist. Der Kunde oder der Händler kann anhand des mitgelieferten Datenrecorders und mit Hilfe eines entsprechenden Auslesegerätes Rückschlüsse auf die Qualität des Produktes ziehen.

Der erfindungsgemäße Datenrecorder ermöglicht insbesondere das Kombinieren der zeitbezogen gemessenen Umweltdaten mit logistischen Daten. Unter logistischen Daten sollen hierbei Angaben wie Hersteller, Herstellungsort, Datum, Preis etc. verstanden werden.

In einer derartigen Ausführungsform, bei der der Datenrecorder wiederum vorzugsweise die Form eines Aufklebers oder eines kartenähnlichen Gegenstandes aufweist, kann der Datenrecorder auch die sonst üblichen Etiketten ersetzen, und stellt somit eine Einrichung dar, die die entsprechenden Etikettdaten zur Verfügung stellt, sowie darüberhinaus Daten bereitstellt, die den ordnungsgemäßen Transport und/oder Lagerung der Ware dokumentieren.

Der Vorteil des erfindungsgemäßen Datenrecorders, insbesondere in einer Ausführungsform als kartenähnlicher Gegenstand oder Aufkleber besteht darin, daß der Datenrecorder sehr flexibel eingesetzt werden kann und eine Anbringung an beliebigen Transportgütern bis hin zu Lebendtiertransporten möglich ist. Der Datenrecorder kann zu einem Zeitpunkt angebracht werden, zu dem das Gut kritische Prozeßschritte, die Funktionstüchtigkeit der Elektronik negativ beeinflussen könnten, bereits durchlaufen hat. Bevorzugterweise weist der erfindungsgemäße Datenrecorder, insbesondere in einer Ausführung als kartenähnlicher Gegenstand oder Aufkleber eine Einrichtung zur Aktivierung des Meßvorgangs auf. Vorzugsweise erfolgt dies nicht über Schalter, Tasten etc. sondern mittels einer mechanischen Zerstörung einer eingebauten Leiterverbindung. Beispielsweise kann dies dadurch gelöst werden, daß eine Ecke der entsprechenden Karte abgebrochen wird oder daß ein Bereich des entsprechenden Aufklebers abgerissen oder eingerissen wird. Allgemein gesprochen wird also ein Teil des Datenrecorderkörpers beschädigt, um die Aktivierung der Protokollierung zu einem definierten Zeitpunkt zu erreichen.

In ähnlicher Weise kann eine Art "Programmierung" des Datenrecorders hinsichtlich Meßzeitintervallen, Meßart etc. erfolgen. Hierzu kann beispielsweise vorgesehen sein, daß mehrere Abrißstreifen vorgesehen sind und daß der Benutzer eine bestimmte Anzahl von Streifen abreißt um dadurch die Länge der Meßzeitintervalle zu "programmieren" oder die Art der aufzuzeichnenden Daten auszuwählen.

Nach Abschluß der Protokollierung, beispielsweise nachdem das zu überwachende Gut den Weg vom Hersteller bis zum Einzelhändler zurückgelegt hat, werden die aufgezeichneten Daten ausgelesen. Die Auslesung kann kontaktbehaftet oder kontaktlos, beispielsweise induktiv erfolgen. Zum Auslesen werden vorzugsweise entsprechend ausgelegte Terminals verwendet, auf denen eine Software abläuft, die die ausgelesenen Daten auswertet und entsprechend komfortabel anzeigt. Insbesondere bei eine kontaktlosen Auslesung kann die Auswertung vollständig automatisch erfolgen, beispielsweise dadurch, daß die entsprechenden Güter über ein Fließband laufen und hierbei die entsprechenden Terminals passieren. Für Waren, bei denen die Auswertung ergibt, daß sie nicht mehr in einwandfreiem Zustand sind, kann eine entsprechende Aussonderung erfolgen.

Um insbesondere bei langen Überwachungszeiträumen die Energieversorgung nicht zu belasten, ist vorgesehen, daß die Steuereinrichtung bzw. der Mikroprozessor zwischen den Meßzeitpunkten in einem Idle-Modus zurückfällt, so daß zwischen den Meßzeitpunkten praktisch keine Energie verbraucht wird. Vorzugsweise ist in dem Speicher des Datenrecorders, insbesondere in einer Ausführung als Chipkarte oder Aufkleber eine Seriennummer eingeschrieben, die eine eindeutige Identifikation des Aufkleber gestattet, und Manipulationen vorbeugt. Hierzu weist der Datenrecorder vorzugsweise ein ROM oder ein EPROM auf. Wie oben bereits angesprochen, können neben der Seriennummer auch logistische Daten, wie Preis, Hersteller, Herstellerdatum, Verfallsdatum, Artikelnummer, Endkunde etc. gespeichert sein.

Weiterhin weist der erfindungsgemäße Datenrecorder, insbesondere in einer Ausführung als Chipkarte, ein extrem flaches Display auf, über das bestimmte Daten auch ohne Ausleseterminal ablesbar sind.

Durch die Ausführung des erfindungsgemäßen Datenrecorder als Wegwerfartikel kann die entsprechende Elektronik äußert einfach angeführt sein. Beispielsweise sind keine Einrichtungen zum Datenreset erforderlich, der Datenrecorder muß nicht zurücktransportiert werden etc.

In einer einfachen Ausgestaltung wird zu jedem Meßwert eine entsprechende Referenzzeit in dem Speicher mit abgelegt, so daß entsprechende Daten - Dupel abgespeichert werden, die mit einfachsten Mittel ausgewertet werden können. Erfolgt die Messung zu fest vorgegebenen Zeitpunkten, die von einem internen Takt des Datenrecorders abgeleitet werden können, ist die Aufzeichnung der Zeit nicht erforderlich, da die Reihenfolge der abgespeicherten Meßwerte bereits Aufschluß über den zeitlichen Verlauf geben. In einer Ausführungsform, bei der nur Änderungen protokolliert werden, ist die Abspeicherung der Zeitpunkte jedoch erforderlich, da nur auf diese Weise eine eindeutige zeitliche Zuordnung der Ereignisse möglich ist.

In einer weiteren Ausführungsform ist der erfindungsgemäße Datenrecorder herstellerseitig bereits in einen Transportbehälter, beispielsweise eine Transportkiste fest eingebaut, vorzugsweise eingeschweißt. Bei einer derartigen Ausführungsform kann auch eine Lösung vorteilhaft sein, bei der nicht alle Komponeten des Datenrecorders mit dem Transportbehälter fest verbunden sind, sondern nur die, die zur mehrmaligen Verwendung geeignet sind. Vorzugsweise ist somit die Steuereinrichtung bzw. der Mikroprozessor, die Sensoreinrichtung und die Zeitgebereinrichtung bereits im Transportbehälter vorhanden, vorzugsweise auf nicht zugängliche Weise. Die Speichereinrichtung, die Batterieeinrichtung und die Unterbrechungseinrichtung werden dagegen für jeden Überwachungsvorgang neu hinzugefügt und treten mit den fest eingebauten Komponenten kontaktbehaftet oder kontaktlos in elektrischen Kontakt. Durch diese Lösung können die teuren Teile wie Mikroprozessoren, Sensoren, Zeitgebereinrichtung mehrfach verwendet werden. Die billigen Verschleißteile wie Batterie, Unterbrechungseinrichtung und Speichereinrichtung werden als Wegwerfkomponenten konzipiert. Vorzugsweise werden die fest eingebauten Teile aktiviert, wenn die restlichen zur Funktion notwendigen Teile (Batterien, Speicher, Unterbrechungseinrichtung) verbunden werden (kontaktbehaftet oder kontaktlos). Vorzugsweise übermittelt der Mikroprozessor bei Beginn der Messung einen Code an den Speicher, wodurch der eigentliche Meßvorgang aktiviert wird. Bei Entfernen der nicht fest eingebauten Teile wird die Messung abgebrochen und damit ungültig. Der übertragene Code läßt einen Rückschluß daraufhin zu, welche Speichereinheit mit welchem Transportbehälter verbunden war und beugt somit Manipulationsversuchen vor.

Zur weiteren Erhöhung der Sicherheit werden die Daten stets nur in verschlüsselter Weise weitergegeben" insbesondere auch bei einer Lösung, wo der Datenrecorder aus zwei Teilen, einem fest eingebauten Teil und einem hinzuzufügenden Teil besteht.

Anwendungsgebiete für den erfindungsgemäßen Datenrecorder ergeben sich bei organischen Materialien, insbesondere bei Lebensmitteln, botanischen Produkten, medizinischen Produkten (Seren, Organspenden, Pharmazeutika). Bei technischen Produkten ist insbesondere an Feuchteüberwachung für Papier, Textilien und Temperaturüberwachung bei Chemikalien ein interessanter Aufgabenbereich. Weiter eignet sich der erfindungsgemäße Datenrecorder zur Raumklimaüberwachung, zur Dokumentation der Raumheizung sowie zur Klimaüberwachung von und an Kunstgegenständen. Ferner ist in der Verfahrenstechnik die Überwachung und Dokumentation von Vorgängen, die Polymerisation von Kunststoffen, Enteisung von Flugzeugen, Temperaturprofil während Lackierprozessen, Schweißprozessen, etc. interessant .

Vorzugsweise ist der Datenrecorder zur einmaligen Verwendung ausgelegt.

Vorzugsweise weist der Datenrecorder eine Schnittstelle auf, über die kontaktbehaftet von einer dazu autorisierten Stelle die aufgezeichneten Daten ausgelesen werden können.

Vorzugsweise weist der Datenrecorder Einrichtungen auf, über die von einer dazu autorisierten Stelle die aufgezeichneten Daten kontaktlos ausgelesen werden können.

Vorzugsweise setzt die Steuereinrichtung den Datenrecorder zur Verringerung der notwendigen Batterieleistung zwischen den einzelnen Meßvorgängen in einen Idle-Modus.

Vorzugsweise besteht die Befestigungeinrichtung aus einer Klebeschicht, mittels der der Datenrecorder auf dem zu überwachenden Gut aufgeklebt wird.

Vorzugsweise weist die Unterbrechungseinrichtung eine Leiterbahn auf, die bei einer Manipulation zerstört wird , wodurch die weitere Meßwerterfassung und/oder -Aufzeichnung abgebrochen wird.

Vorzugsweise umfaßt die Aktivierungseinrichtung einen Teil der Karte bzw. des Aufklebers, der abgerissen werden muß, um die Aktivierung zu veranlassen.

Vorzugsweise besteht die Befestigungseinrichtung aus einem ohne Zerstörung nicht mehr zu öffnenden Band , durch das der Datenrecorder mit dem zu öffnende Gut verbunden wird.

Vorzugsweise sind die Steuereinrichtung, vorzugsweise Mikroprozessoreinrichtung, die mindestens eine Sensoreinrichtung sowie die Zeitgebereinrichtung als ein erster Gegenstand ausgeführt , der für mehrmalige Anwendung und zum Einbau in einem Transportgefäß konzipiert ist, und daß die Speichereinrichtung, die Batterieeinrichtung und die Unterbrechungseinrichtung als ein zweiter Gegenstand ausgeführt sind, der mittels einer Befestigungseinrichtung unmittelbar am zu überwachenden Gut befestigbar ist, wobei die beiden Gegenstände Eirichtungen aufweisen um miteinander kontaktlos kommunizieren zu können, um somit gemeinsam als Datenrecorder zu funktionieren.

Vorzugsweise sind zumindest die Speichereinrichtung, die Steuereinrichtung und die Zeitgebereinrichtung auf einem extrem dünnen, vorzugsweise weniger als 20µm dicken Chip integriert.

## Patentansprüche

1. Datenrecorder mit:
mindestens einer Sensoreinrichtung zur Erfassung mindestens einer aufzuzeichnenden Meßgröße während eines Überwachungsintervalls,
einer Steuereinrichtung, vorzugsweise einer Mikroprozessoreinrichtung, zur Steuerung der Meßdatenerfassung und -aufzeichnung,
einer Zeitgebereinrichtung zum Bereitstellen einer Referenzzeit, auf Grundlage derer auf die tatsächlichen Meßzeitpunkte zurückgeschlossen werden kann,
einer Speichereinrichtung zum Speichern der erfaßten Meßwerte und vorzugsweise der für jeden Meßwert von der Zeitgebereinrichtung bereitgestellten Referenzzeit,
einer Batterieeinrichtung zur Leistungsversorgung,
einer Befestigungseinrichtung zum Anbringen des Datenrecorders an einem zu überwachenden Gut,
einer Unterbrechungseinrichtung, die die Meßdatenaufzeichnung und/oder Meßdatenerfassung unterbricht, sobald an der Befestigungseinrichtung manipuliert wird.

2. Datenrecorder nach Anspruch 1, **dadurch gekennzeichnet, daß** der Datenrecorder weiterhin eine Aktivierungseinrichtung enthält, mittels der die Meßdatenerfassung und - aufzeichnung zu einem definierten Zeitpunkt gestartet werden kann.

3. Datenrecorder nach Anspruch 1 oder 2, **dadurch gekennzeichnet, daß** der Datenrecorder als Chipkarte vorzugsweise aus Plastik oder Papier ausgeführt ist.

4. Datenrecorder nach einem der vorhergehenden Ansprüche, **dadurch gekennzeichnet, daß** der Datenrecorder als Aufkleber ausgeführt ist, der auf das zu überwachende Gut aufgeklebt wird.

5. Datenrecorder nach einem der vorhergehenden Ansprüche, **dadurch gekennzeichnet, daß** mindestens eine Sensoreinrichtung mindestens eine der folgenden Größen erfaßt: Temperatur, relative Feuchte der umgebenden Luft, Beschleunigung, Schallpegel, radioaktive Strahlung, insbesondere die für verschiedene Sterilisationsvorgänge eingesetzte Gammastrahlung.

6. Datenrecorder nach einem der vorhergehenden Ansprüche, **dadurch gekennzeichnet, daß** die Sensoreinrichtung einen chemischen Sensor enthält, mittels dem durch eine geeignete sensitive Beschichtung der Gehalt an entsprechenden chemischen Substanzen in der umgebenen Atmosphäre erfaßt werden kann.

7. Datenrecorder nach einem der vorhergehenden Ansprüche, **dadurch gekennzeichnet,daß** in der Speichereinrichtung für jeden Meßwert auch die von der Zeitgebereinrichtung zum Meßzeitpunkt bereitgestellte Referenzzeit gespeichert wird.

8. Datenrecorder nach einem der vorhergehenden Ansprüche, **dadurch gekennzeichnet, daß** eine Anzeigeeinrichtung vorgesehen ist, über die den Meßvorgang betreffende Daten ablesbar sind.

9. Datenrecorder nach einem der vorhergehenden Ansprüche, **dadurch gekennzeichnet, daß** in der Speichereinrichtung eine Identifikationsnummer gespeichert ist, über die der Datenrecorder eindeutig identifizierbar ist.

10. Transportbehälter in den ein Datenrecorder gemäß einem der Ansprüche 1-9 fest eingebaut ist.

## Claims

1. Data recorder comprising:
at least one sensor unit to compile at least one measurement value to be recorded during a monitoring interval;
a control unit, preferably a microprocessor unit, to control the compiling and recording of measurement data;
a clock unit to provide a reference time on the basis of which the actual measurement times can be defined;
a memory unit to store the measurement values compiled and preferably the reference time provided for each measurement value by the clock unit;
a battery unit for power supply;
a fixation unit to fix the data recorder to an item to be monitored;
an interruption unit which interrupts the recording and/or compiling of measurement data upon any manipulation of the fixation unit.

2. Data recorder according to claim 1, **characterized in that** the data recorder further contains an activation unit by means of which the compiling and recording of measurement data can be started at a defined point of time.

3. Data recorder according to claim 1 or 2, **characterized in that** the data recorder is designed as a chip card, preferably made of plastics or paper.

4. Data recorder according to any one of the preceding claims, **characterized in that** the data recorder is designed as a sticker, which is stuck onto the item to be monitored.

5. Data recorder according to any one of the preceding claims, **characterized in that** at least one sensor unit compiles at least one of the following values: temperature, relative humidity of surrounding air, acceleration, noise level, radioactive radiation, in particular gamma radiation used for various sterilization processes.

6. Data recorder according to any one of the preceding claims, **characterized in that** the sensor unit contains a chemical sensor by means of which through a suitable sensitive coating the content of certain chemical substances in the surrounding atmosphere can be compiled.

7. Data recorder according to any one of the preceding claims, **characterized in that** in the memory unit for each measurement value, the reference time provided by the clock unit at the time of measurement is also stored.

8. Data recorder according to any one of the preceding claims, **characterized in that** a display unit is provided by means of which data concerning the measurement procedure can be read.

9. Data recorder according to any one of the preceding claims, **characterized in that** an identification number is stored in the memory unit by means of which a clear identification of the data recorder is possible.

10. Transport container into which a data recorder according to any one of claims 1 to 9 has been permanently integrated.

## Revendications

1. Enregistreur de données avec :
au moins un dispositif de capteur pour la saisie d'au moins une valeur de mesure à enregistrer pendant un intervalle de surveillance,
un dispositif de commande, de préférence un dispositif à microprocesseur, pour la commande de la saisie et de l'enregistrement des données de mesure,
un dispositif de génération d'horloge pour la disposition d'un temps de référence sur la base duquel on peut déduire les instants de mesure réels,
un dispositif de mémoire pour la mémorisation des valeurs de mesure saisies et, de préférence, du temps de référence mis à disposition par le dispositif de registre d'horloge pour chaque valeur de mesure,
un dispositif de batterie pour l'alimentation de puissance,
un dispositif de fixation pour l'installation de l'enregistreur de données sur un article à surveiller,
un dispositif d'interruption qui interrompt l'enregistrement des données de mesure dès qu'une manipulation est effectuée sur le dispositif de fixation.

2. Enregistreur de données selon la revendication 1, **caractérisé en ce que** l'enregistreur de données comprend, en outre, un dispositif d'activation à l'aide duquel la saisie et l'enregistrement des données de mesure peuvent être démarrés à un instant défini.

3. Enregistreur de données selon la revendication 1 ou 2, **caractérisé en ce que** l'enregistreur de données est conçu comme une carte à puce en plastique ou en papier.

4. Enregistreur de données selon l'une des revendications précédentes, **caractérisé en ce que** l'enregistreur de données est conçu comme un adhésif qui est collé sur l'article à surveiller.

5. Enregistreur de données selon l'une des revendications précédentes, **caractérisé en ce qu'**au moins un dispositif de capteur saisissant au moins une des valeurs suivantes : température, humidité relative de l'air environnant, accélération, niveau sonore, rayonnement radioactif, en particulier le rayonnement gamma utilisé pour divers procédés de stérilisation.

6. Enregistreur de données selon l'une des revendications précédentes, **caractérisé en ce que** le dispositif de capteur comprend un capteur chimique à l'aide duquel la teneur en substances chimiques appropriées dans l'atmosphère environnante peut être captée à l'aide d'un revêtement sensible approprié.

7. Enregistreur de données selon l'une des revendications précédentes, **caractérisé en ce que**, dans le dispositif de capteur, le temps de référence mis à disposition par le dispositif de génération d'horloge à l'instant de mesure est également mémorisé pour chaque valeur de mesure.

8. Enregistreur de données selon l'une des revendications précédentes, **caractérisé en ce qu'**un dispositif d'affichage est prévu à l'aide duquel les données concernant le processus de mesure peuvent être lues.

9. Enregistreur de données selon l'une des revendications précédentes, **caractérisé en ce qu'**un numéro d'identification, à l'aide duquel l'enregistreur de données est clairement identifiable, est enregistré dans le dispositif de mémoire.

10. Conteneur de transport dans lequel un enregistreur de données selon l'une des revendications 1 à 9 est installé à demeure.
